# FASCICULE DE BREVET EUROPEEN

(11) **EP 1 124 432 B1**
(45) Date de publication et mention de la délivrance du brevet: **16.03.2005**
(21) Numéro de dépôt: 99950897.1
(22) Date de dépôt: 02.11.1999
(51) Int. Cl.: A23C 9/137, A23C 19/16

(54) **CAPSULES DE PRODUIT LAITIER ET LEUR PROCEDE DE FABRICATION**
MILCHPRODUKT-KAPSELN UND VERFAHREN ZU DEREN HERSTELLUNG
DAIRY PRODUCT CAPSULES AND METHOD FOR MAKING SAME

(30) Priorité: 02.11.1998 FR 9813752
(43) Date de publication de la demande: 22.08.2001
(73) Titulaire: COMPAGNIE GERVAIS-DANONE, F-92302 Levallois Perret (FR)
(72) Inventeur: BARBEAU, Jean-Yves, F-19100 Brive-la-Gaillarde (FR); GAUTHIER, Pierre, F-91400 Orsay (FR); LAM, David, F-78360 Montesson (FR); NOBLE, Olivier, F-91400 Orsay (FR)
(74) Mandataire: Vialle-Presles, Marie José
(86) Numéro de dépôt international: PCT/FR1999/002669
(87) Numéro de publication internationale: WO 2000/025597

(56) Documents cités:
- EP-A- 0 048 123
- DE-A- 2 402 415
- US-A- 4 375 481
- PATENT ABSTRACTS OF JAPAN vol. 007, no. 091 (C-162), 15 avril 1983 (1983-04-15) & JP 58 020176 A (TOUYOU SEIKAN KK), 5 février 1983 (1983-02-05)
- DATABASE WPI Section Ch, Week 8321 Derwent Publications Ltd., London, GB; Class D13, AN 83-50085K XP002110181 & JP 58 063373 A (TOYO SEIKAN KAISHA LTD), 15 avril 1983 (1983-04-15)

## Description

L'invention est relative à des capsules de produit laitier comprenant une enveloppe dans laquelle est confiné ledit produit laitier, ainsi qu'à un procédé de fabrication de ces capsules.

L'enrobage de yaourt dans un polymère alimentaire (alginate de sodium) par la technique du gouttage du yaourt dans l'alginate en solution est déjà connu (Demande de Brevet japonaise au nom de MEIJI MILK PROD. CO. Ltd, publiée sous le numéro JP-A-62 130 645: il est indiqué dans ce document que l'on obtient ainsi des capsules de forme sphérique (billes de yaourt).

Toutefois, les capsules de yaourt obtenues selon cette Demande de Brevet japonaise présentent de nombreux inconvénients qui limitent considérablement leurs possibilités d'exploitation industrielle et commerciale :
- il est difficile d'enrober un produit laitier fluide dans les capsules : tous les exemples mentionnés dans la Demande de Brevet japonaise susmentionnée recommandant d'utiliser un yaourt de viscosité élevée, supérieure à 2000 mPa.s à 10°C ;
- leur enveloppe d'alginate, aisément déformable, ne permet pas la conservation de leur forme sphérique. Elles sont en outre très fragiles ; elles crèvent si facilement que leur manipulation, en particulier au cours de la fabrication et du conditionnement, est rendue très difficile, voire impossible à une échelle industrielle ;
- elles sont sujettes au phénomène de synérèse, c'est-à-dire à l'exsudation de liquide à la surface de la capsule. Ce phénomène provoque des irrégularités de surface, et crée en outre un environnement favorable au développement microbien, ce qui nuit à la conservation des billes.

Pour pallier ces inconvénients, il est proposé, dans la Demande JP-A-62 130 645 de plonger les capsules, dès leur formation, dans une solution aseptique ou antiseptique ou une solution de sucre, et de les y laisser, pour préserver leur forme sphérique.

Les Inventeurs se sont donc donné pour but de pourvoir à des capsules de produit laitier résistantes et stables sans nécessiter l'immersion dans une solution de conservation, et présentant, en outre, une perception en bouche agréable pour le consommateur, et ont recherché des polymères d'enrobage qui permettraient de parvenir à ce but.

Ils ont ainsi constaté que la sélection de polymères d'enrobage sur la base de leur résistance à la rupture permettait d'obtenir des capsules possédant les propriétés recherchées.

La présente invention a ainsi pour objet une capsule comprenant une enveloppe, comprenant au moins un polymère à usage alimentaire, réactif aux ions multivalents, à l'intérieur de laquelle est confiné un produit laitier, caractérisée en ce que ladite enveloppe comprend, en outre, au moins un composé sélectionné dans le groupe constitué par les plastifiants, les sucres, les agents séquestrants des ions multivalents et les agents rétenteurs d'eau, et en ce que ladite capsule possède une force à la rupture supérieure à 0,5 N, de préférence comprise entre 0,5 et 1,5 N.

Au sens de la présente invention, on entend par « polymère réactif aux ions multivalents » un polymère à usage alimentaire susceptible de réagir chimiquement avec des ions multivalents (dans le cas présent, il s'agit d'ions ayant perdu plus d'un électron) pour former un réseau réticulé (réticulation chimique, irréversible) sous la forme d'un gel. En particulier, de tels polymères comprennent des unités guluroniques, galacturoniques ou glucuroniques, de façon plus générale des unités uroniques, permettant la chélation des ions multivalents, notamment des ions calcium qui sont présents en grande quantité dans les produits laitiers.

Des polymères à usage alimentaire utilisables pour la préparation de capsules conformes à l'invention sont par exemple les alginates, les gellanes, les pectines, ou les mélanges de ces polymères.

Les capsules conformes à l'invention comprennent avantageusement au moins 40 %, de préférence au moins 45 %, et avantageusement au moins 60% en poids de produit laitier par rapport au poids total de la capsule.

Le produit laitier encapsulé dans l'enveloppe de polymère à usage alimentaire décrite ci-dessus peut être un produit laitier fermenté ou non, et notamment peut être choisi parmi les yaourts, les yaourts à boire, les laits fermentés, les fromages frais, les crèmes desserts et/ou les mousses lactées. Sa texture peut être très fluide (produit laitier de type yaourt à boire) ou bien visqueuse (produit laitier de type yaourt brassé).

Les capsules conformes à l'invention sont préparées par mise en contact du produit laitier à encapsuler avec un bain comprenant, en solution aqueuse, au moins un polymère à usage alimentaire réactif aux ions multivalents tel que défini précédemment. On récupère ensuite les capsules formées, que l'on peut éventuellement rincer, puis sécher.

Selon la nature du produit laitier que l'on souhaite encapsuler, deux variantes principales du procédé de préparation des capsules conformes à l'invention peuvent être mises en oeuvre.

Selon une première variante, la mise en contact s'effectue par gouttage du produit laitier à encapsuler dans le bain de polymère alimentaire.

Pour obtenir des capsules ayant les propriétés souhaitées, on choisira dans ce cas un polymère qui, en solution aqueuse à 1 %, présente une viscosité (mesurée à 25°C et à 60 rpm), inférieure à 200 mPa.s, de préférence inférieure à 100 mPa.s.

Ledit polymère est avantageusement sélectionné dans le groupe constitué par :
- les alginates fortement gélifiants de poids moléculaire inférieur ou égal à 100 000 (couramment désignés sous le nom d'alginates dépolymérisés) ; ces alginates sont de préférence sélectionnés dans le groupe constitué par les alginates de sodium et les alginates de potassium ;
- les gellanes faiblement acétylées, et
- les pectines de degré d'estérification inférieur ou égal à 20.

Au sens de la présente invention, on qualifie de « fortement gélifiants » des alginates dont la teneur en acide guluronique est supérieure à 50 % et de « faiblement acétylées » des gellanes dont le degré de substitution maximal en groupes acétyles est de 0,03. Quant au degré d'estérification des pectines, il correspond au pourcentage d'unités galacturoniques des pectines portant un groupement méthoxyle.

A titre d'exemple de mise en oeuvre de cette première variante du procédé conforme à l'invention, les gouttes de produit laitier peuvent être formées à partir d'un tube rigide, dont le diamètre d'ouverture règle le diamètre des gouttes (typiquement de 2 à 15 mm) et qui se trouve à quelques centimètres au-dessus du bain, par exemple à 5-10 cm, la hauteur de chute des gouttes étant ajustée de manière à ce que le produit laitier pénètre bien dans le bain et à ce que les gouttes aient une forme sensiblement sphérique. Pour ce faire, la viscosité du bain doit être relativement faible, préférentiellement inférieure à 200 mPa.s à 50 rpm.

Le produit laitier est avantageusement à une température de 4 à 10°C et le bain à une température de 5 à 50°C environ. La température du bain ne doit toutefois pas excéder 45°C dans le cas où le produit laitier est un yaourt, ceci pour ne pas dégrader les bactéries présentes dans le yaourt.

Les gouttes de produit laitier sont maintenues dans le bain pendant un temps suffisant pour que, par diffusion des ions multivalents, notamment des ions calcium présents dans le produit laitier, se forme autour de ces gouttes une pellicule de gel suffisamment rigide pour permettre de manipuler les capsules ainsi formées. L'épaisseur de cette pellicule de gel est typiquement de 0,1 à 0,5 mm et est fixée par le temps de trempage dans le bain (de 2 à 20 minutes environ).

Selon une seconde variante, la mise en contact s'effectue par coextrusion du produit laitier avec une solution dudit polymère à usage alimentaire. Cette variante permet l'utilisation de solutions de polymères de viscosité élevée pour lesquelles la technique de gouttage du produit laitier dans la solution de polymère n'est plus utilisable. La viscosité de ces solutions peut être supérieure à 200 mPa.s.

On peut utiliser l'une quelconque des techniques. de coextrusion connues en elles-mêmes, permettant l'encapsulation de produits alimentaires, en particulier de produits alimentaires pâteux. A titre d'exemple, on citera les techniques décrites dans le Brevet DE 3,432,923, dans la Demande de Brevet Internationale WO 92/14544, dans le Brevet DE 2,402,415, ou dans l'ouvrage : *Microcapsule Processing and Technology,* Marcel Dekker, Inc., Ch. 7, 59-63 (1979).

On utilise un tube à double enveloppe : le produit laitier est acheminé au centre, et la solution comportant au moins un polymère à usage alimentaire réactif aux ions multivalents en périphérie. Dès leur sortie du tuyau intérieur, les gouttes de produit laitier sont immédiatement recouvertes de la solution de polymère, et sont ensuite introduises dans une solution de chlorure de calcium pendant un temps suffisant pour que la réaction de gélification se poursuive et que l'enveloppe des capsules de produit laitier soit suffisamment résistance pour permettre leur manipulation.

L'épaisseur de l'enveloppe est fonction des débits d'alimentation dans les deux tubes et des viscosités respectives du produit laitier et de la solution de polymère.

Pour la mise en oeuvre de cette variante, on utilise une solution de polymère à usage alimentaire dont la viscosité, lors de sa mise en oeuvre est d'environ 1100-1200 mPa.s (mesure à 25°C et à 64 s⁻¹), une telle solution étant filante et nappante et se répandant de façon uniforme sur la goutte de yaourt.

Le polymère utilisé est un polymère réactif aux ions multivalents, choisi parmi les alginates forcement gélifiants, les gellanes et les pectines de degré d'estérification inférieur ou égal à 20.

Que l'on utilise la technique de coextrusion ou celle du gouttage, la solution de polymère comprend en outre au moins un composé sélectionné dans le groupe constitué par les plastifiants, les sucres, les agents séquestrants des ions multivalents et les agents rétenteurs d'eau.

Le plastifiant est de préférence sélectionné dans le groupe constitué par les alginates peu gélifiants de poids moléculaire inférieur ou égal à 100 000, les pectines de degré d'estérification compris entre 20 et 50, le sorbitol, le glycérol, les maltodextrines et les polyols.

On entend par « alginates peu gélifiants » des alginates dont la teneur en acide mannuronique, motif non réactif aux ions multivalents, est supérieure à 50 %.

De façon particulièrement avantageuse, la présence d'au moins un plastifiant permet d'assouplir le réseau formé par le polymère à usage alimentaire avec les ions multivalents et permec donc une meilleure fonte en bouche de l'enveloppe, lors de la consommation.

Le plastifiant permet également d'empêcher la contraction de la pellicule de polymère à usage alimentaire formée et ainsi de limiter encore le phénomène de synérèse.

La présence éventuelle de sucre assure une meilleure dispersion des macromolécules de polymère à usage alimentaire lors de la préparation de la solution et permet d'ajuster la densité de celle-ci ; en outre, elle permet de modifier le goût du gel constituant l'enveloppe des capsules.

La présence d'un agent séquestrant des ions multivalents permet de piéger les ions multivalents en excès qui contribuent au phénomène de synérèse ; l'agent séquestrant des ions multivalents est de préférence un agent séquestrant des ions calcium sélectionné dans le groupe constitué par les citrates, les phosphates, les pyrophosphates et les métaphosphates. On peut citer, à titre d'exemples et de façon non limitative, le pyrophosphate de tétrasodium (Na₄P₂O₇) , l'hexamétaphosphate de sodium (Na₅(PO₃) ₅) et le citrate de sodium (C₃H₄ (OH) (COONa) ₃). En variante, l'agent séquestrant est présent non pas dans la solution de polymère, mais dans le produit laitier.

La présence d'un agent rétenteur d'eau permet de limiter la synérèse. Un tel agent est de préférence sélectionné dans le groupe constitué par la caroube et le guar, ces composés étant des galactomannanes extraits de l'albumen des graines de légumineuses.

Lorsqu'un agent rétenteur d'eau est présent dans le cas de capsules formées par la technique du gouttage dans le bain, ce dernier est porté à une température suffisante pour abaisser sa viscosité à une valeur inférieure à 200 mPa.s ; une température convenable est par exemple de 30 à 45°C.

Avantageusement, la solution de polymère comprend (exprimés en pourcentages pondéraux par rapport à son volume total) :
a) entre 0,5 et 5 % de polymère à usage alimentaire réactif aux ions multivalents ;
b) entre 0 et 10 % de plastifiant ;
c) entre 0 et 2 % d'agent séquestrant ; et
d) entre 0 et 2 %, de préférence entre 0,4 et 2 %, d'agent rétenteur d'eau.

Elle peut contenir en outre entre 0 et 20 % de sucre.

Selon un mode de mise en oeuvre préféré du procédé selon l'invention, l'étape de récupération des capsules formées est suivie d'au moins un rinçage desdites capsules à l'aide d'eau permutée et/ou sucrée, pour éliminer les traces de polymère non réticulé restant en surface, ce qui permet d'éviter la réagglomération des capsules après leur conditionnement. On pourra par exemple effectuer trois rinçages successifs, puis égoutter convenablement les capsules avant leur conditionnement.

Selon un autre mode de mise en oeuvre préféré du procédé selon l'invention, le rinçage est suivi d'une étape de séchage desdites capsules. Un tel séchage permet d'évaporer l'eau qui est exsudée en surface des capsules après leur fabrication, et donc d'éliminer tout phénomène de synérèse ultérieur. Il peut être réalisé, par exemple, par mise en contact des capsules avec un flux d'air pendant 30 minutes à 5 heures, par exemple à 4°C (dans un réfrigérateur ventilé par exemple).

Les capsules susceptibles d'être obtenues par l'une ou l'autre des variantes du procédé décrit ci-dessus constituent des modes de réalisation préférés de la présente invention.

L'enveloppe de ces capsules comprend avantageusement, par rapport au poids sec total de ses différents constituants :
a) entre 10 et 100% en poids de polymère à usage alimentaire réactif aux ions multivalents ;
b) entre 0 et 90%, de préférence entre 0,5 et 10%, et avantageusement au moins 1% en poids de plastifiant ;
c) entre 0 et 30% en poids d'agent séquestrant des ions multivalent ;
d) entre 0 et 50% d'agent rétenteur d'eau.

Les capsules selon la présente invention permettent en particulier d'enrober un produit laitier fluide, tel qu'un yaourt à boire ou une crème dessert fluide. En outre, elles sont peu fragiles et sont donc aisément manipulables au cours de la fabrication industrielle. Ces capsules peuvent ensuite être conservées telles quelles, sans recourir à une solution de conservation ; elles gardent leur forme sphérique, et on n'observe pratiquement qu'une faible synérèse, qui ne nuit pas à la conservation.

En outre, l'impression en bouche donnée par les capsules conformes à l'invention est très agréable. Contrairement aux capsules décrites dans la Demande JP-A-62 130 645, les capsules conformes à l'invention sont croquantes et libèrent le yoghourt, produisant ainsi une impression de fraîcheur, très appréciée des consommateurs.

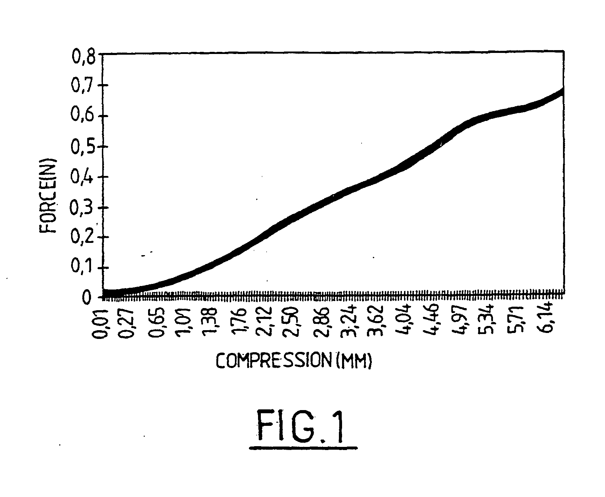

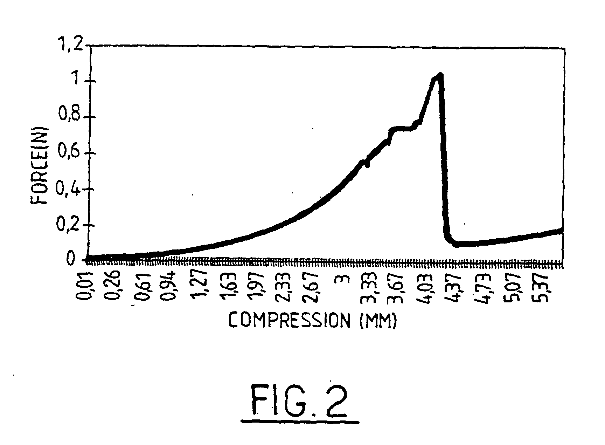

Outre les dispositions qui précèdent, l'invention comprend encore d'autres dispositions qui ressortiront de la description qui va suivre, qui se réfère à des exemples de mise en oeuvre de la présente invention, ainsi qu'aux figures 1 et 2 annexées qui illustrent, sous forme de courbes représentant la force exercée sur la capsule (en N) en fonction de la déformation (compression) subie par celle-ci (en mm), la résistance à la rupture de capsules selon l'art antérieur (figure 1) et selon la présente invention (figure 2) .

Il doit bien être entendu, toutefois, que ces exemples sont donnés uniquement à titre d'illustration de l'objet de l'invention, dont ils ne constituent en aucune manière une limitation.

### EXEMPLE 1 : COMPOSITION CHIMIQUE, CARACTÉRISTIQUES PHYSIQUES ET ORGANOLEPTIQUES DE DIFFÉRENTES CAPSULES SELON L'INVENTION, EN ABSENCE DE PLASTIFIANT DANS L'ENVELOPPE DESDITES CAPSULES.

Les capsules ont été fabriquées d'après le procédé de gouttage dans un bain selon l'invention. Toutes les mesures de viscosité indiquées ci-dessous ont été réalisées à l'aide d'un viscosimètre BROOKFIELD de type RVT, à la vitesse de 50 tours/mn.

Les gouttes de produit laitier, d'un diamètre de 10 mm, sont formées à partir d'un tube rigide placé à environ 5 cm au-dessus du bain de trempage, ce dernier étant à une température de 25°C. Une fois formées, et à l'issue du temps de trempage indiqué dans le tableau 1 ci-dessous, les capsules sont récupérées et rincées trois fois à l'aide d'eau permutée.

Le produit laitier utilisé est un yaourt fluide dont la viscosité à 10°C, mesurée à 64 s⁻¹, est de 900 mPa.s. Sa température, au moment du gouttage dans le bain de trempage, est de 5°C environ.

L'alginate utilisé est fortement gélifiant. Il s'agit d'un alginate de sodium qui possède un poids moléculaire de 90 000 dalton environ et une viscosité en solution aqueuse à 1 %, mesurée à 60 rpm et à 20°C, de 75 mPa.s, et qui est commercialisé par la société NUTRASWEET KELCO (MONSANTO) sous la dénomination MANUGEL GHB, ou encore par la société SKW BIOSYSTEMS sous la dénomination SATIALGINE SG80. La pectine utilisée est commercialisée, par exemple, par la société HERCULES sous le nom GENU PECTIN LM5CS. Elle présente une capacité de gélification élevée, un degré d'estérification de 10% et une viscosité en solution aqueuse à 4%, mesurée à 50 rmp et à 20°C, de l'ordre de 100 mPa.s.

Le tableau 1 résume, pour deux capsules (1) et (2), la composition du bain de trempage (p/v de solution aqueuse), le temps de trempage (min.), le pourcentage de yaourt encapsulé (p/p total de la capsule) et le pourcentage de synérèse, mesuré en pesant le sérum exsudé par une quantité de 50 à 70 g de capsules après une conservation de 24 h à 4°C dans un récipient fermé.

**TABLEAU 1**

| capsules n° | Composition du bain de trempage | temps de trempage (min) | % de yaourt | % synérèse |
|---|---|---|---|---|
| (1) | 1.5 % alginate | 5 | 71,1 | 23,4 |
| | 10 % sucre | | | |
| (2) | 4 % pectine | 10 | 75,3 | 11,3 |
| | 5 % sucre | | | |

Les capsules (1) et (2) sont peu fragiles et présentent, lors de la consommation, un bon croquant.

### EXEMPLE 2 : COMPOSITION CHIMIQUE, CARACTÉRISTIQUES PHYSIQUES ET ORGANOLEPTIQUES DE DIFFÉRENTES CAPSULES SELON L'INVENTION, UN PLASTIFIANT ÉTANT PRÉSENT DANS L'ENVELOPPE DESDITES CAPSULES.

Les capsules ont été obtenues par la technique du gouttage telle que décrite dans l'exemple 1.

Le produit laitier, la pectine et l'alginate sont les mêmes que dans l'exemple 1. Les formulations présentées ci-dessous comportent toutefois, outre les alginates et les pectines de l'exemple 1, d'autres types d'alginates et de pectines qui sont peu gélifiants, dénommés « alginate M » et « pectine LM ».

L'alginate M est un alginate de sodium de poids moléculaire d'environ 18 000 dalton, commercialisé par la société NUTRASWEET KELCO sous la dénomination MANUCOL LB. La pectine LM (« low methoxy »), commercialisée par la société HERCULES sous la dénomination GENU PECTIN LM 105-AS, est une pectine de degré d'estérification de 46 % et de degré d'amidation de 9 %.

Quant au glycérol présent dans la capsule (4) (voir le tableau 2), il peut par exemple être obtenu auprès de la société LOUIS FRANCOIS sous la référence « glycérol alimentaire ».

Le tableau 2 résume, pour trois capsules (3) à (5), la composition du bain de trempage (p/v de solution aqueuse), le temps de trempage (min.), le pourcentage de yaourt encapsulé (p/p total de la capsule) et le pourcentage de synérèse mesuré selon le protocole décrit dans l'exemple 1.

**TABLEAU 2**

| capsules n° | Composition du bain de trempage | temps de trempage | % de yaourt | % synérèse |
|---|---|---|---|---|
| (3) | 0,75 % alginate | 10 | 60,1 | 13,0 |
| | 1,5 % pectine LM | | | |
| | 10 % sucre | | | |
| (4) | 1,5 % pectine | 10 | 66,9 | 12,9 |
| | 0,75 % alginate | | | |
| | 5 % glycérol- | | | |
| | 5 % sucre | | | |
| (5) | 1,5 % pectine | 7 | 69,7 | 10,0 |
| | 0,2 % alginate | | | |
| | 2,5 % alginate M | | | |
| | 10 % sucre | | | |

Les capsules sont suffisamment rigides pour pouvoir être manipulées sans crever, les capsules (3) et (4) étant les plus solides. Lors de la consommation, les capsules (3) et (4) présentent un bon croquant, alors que les capsules (5) sont plus souples. L'effet « peau de raisin » est atténué pour l'ensemble des capsules (3) à (5), le gel étant le moins perceptible dans la formulation (5).

### EXEMPLE 3 : FABRICATION DE CAPSULES DE YAOURT PAR COEXTRUSION.

### a) Composition de la solution de polymère

La solution qui est utilisée pour former l'enveloppe des capsules a la composition suivante :
- 2 % p/V de pectine LM 5CS (voir exemple 1);
- 0,9 % p/V d'alginate fortement gélifiant (voir exemple 1) ;
- 0,45 % p/V de caroube ;
- 5 % p/V de sucre.
   Cette solution est utilisée à 20°C, ce qui correspond à une viscosité de 1100-1200 mPa.s (viscosité mesurée à l'aide d'un viscosimètre BROOKFIELD, à 50 rpm).

### b) Yaourt utilisé

On utilise un yaourt présentant une viscosité de 1400 à 1650 mPa.s à 10°C (viscosité mesurée à l'aide d'un viscosimètre RHEOMAT 108, à 64 s⁻¹). Lors du procédé par coextrusion présenté dans cet exemple, le yaourt est utilisé à une température de 4 à 6°C.

### c) Procédé mis en oeuvre

Le coextrudeur utilisé pour obtenir les capsules de yaourt présentées dans cet exemple est constitué de 2 tubes concentriques.
- le yaourt est acheminé, grâce à une pompe péristaltique, dans le tube intérieur d'un diamètre de 4 mm, à un débit de 660 à 1080 g/heure;
- la solution de biopolymères décrite ci-dessus est acheminée à l'aide d'une autre pompe péristaltique dans le tube extérieur, d'un diamètre de 8 mm et formant un entrefer de 1 mm avec le tube interne, à un débit de 1200 à 1500 g/heure.

Les extrémités des 2 tubes ne sont pas positionnées au même niveau : le tube extérieur ressort de 5 mm environ par rapport au tube intérieur pour éviter l'obstruction ou la sortie saccadée du yaourt au contact de la solution de biopolymères.

Les gouttes de yaourt sont formées à la sortie du tube intérieur du coextrudeur, sous l'effet de la gravité. Elles sont instantanément recouvertes par la solution de biopolymères provenant du tube extérieur.

Les gouttes ainsi préformées chutent, d'une hauteur de 10 à 12 cm (calculée pour obtenir des billes sphériques) dans une solution de chlorure de calcium à 2 %, à température ambiante, 1 à 2 minutes de trempage dans cette solution permettent aux ions calcium contenus dans le yaourt et la solution de trempage de diffuser dans l'enveloppe des billes et d'achever la gélification (durcissement de l'enveloppe).

Les billes sont alors extraites de la solution de chlorure de calcium à l'aide d'un tamis et rincées dans 3 bains successifs d'eau permutée, ce qui permet d'éviter la réagglomération des billes après leur conditionnement et de rincer l'excès de chlorure de calcium. Après le dernier rinçage, les billes sont égouttées, puis conditionnées.

### d) Caractéristiques physiques et organo leptiques des billes obtenues par coextrusion

Les billes obtenues ont un diamètre de 10 à 11 mm, avec une enveloppe de 0,7 à 1,5 mm d'épaisseur. Elles comportent de 40 à 45 % de yaourt et de 55 à 60 % de gel (enveloppe), ces pourcentages étant exprimés par rapport au poids total de la capsule.

Le taux de synérèse mesuré 48 heures après la fabrication des capsules est de 6 à 10 % ; il est de 10 à 12 % après 7 jours.

Une observation des capsules après 48 heures révèle que ces dernières sont peu fragiles, croquantes, sans effet « peau de raisin ». Le gel relargue bien le yaourt après éclatement de la capsule.

### EXEMPLE 4 : COMPARAISON DE LA RÉSISTANCE À LA RUPTURE DE CASPULES DE YAOURT SELON L'INVENTION ET DE CAPSULES DE L'ART ANTERIEUR.

Un test de compression uniaxiale a été réalisé afin de mesurer le comportement des capsules soumises à une pression.

Les capsules utilisées sont, d'une part, des capsules obtenues selon l'exemple 2 ci-dessus, et, d'autre part, des capsules de l'art antérieur obtenues d'après l'exemple 1 de la Demande de Brevet japonaise au nom de MEIJI MILK PROD. CO. Ltd, publiée sous le numéro JP-A-62 130 645. Dans les 2 cas, ces capsules ont un diamètre de 10 mm.

Le test de compression uniaxiale consiste à placer une capsule sur une surface plane horizontale et à la comprimer à l'aide d'un plateau horizontal, de diamètre supérieur à celui de la capsule, qui se déplace verticalement en appuyant sur ladite capsule. Ce plateau est muni d'un capteur qui mesure à chaque instant la force exercée sur la capsule. Un tel appareil est par exemple disponible auprès de la société ADAMEL LHOMARGY sous le nom DY20. La vitesse de déplacement du plateau utilisée est de 200 mm/min.

La figure 1 représente le comportement des capsules de l'art antérieur et la figure 2 celui des capsules selon la présente invention, la compression (en mm) figurant en abscisses et la force appliquée (en Newton) en ordonnées.

Pour les capsules de l'art antérieur, on observe un profil de courbe sensiblement linéaire, ce qui traduit un écrasement progressif de la capsule, qui adopte la forme qu'on lui impose et ne résiste donc pas à la compression. Il s'agit d'un comportement de type « liquide» : une réduction de 30 % du diamètre des capsules est observée dès 0,3 N, puis les capsules continuent à s'aplatir et à se déformer sans se rompre.

En revanche, pour les capsules réalisées selon la présente invention (figure 2), la courbe présente une forme exponentielle, les capsules résistant à une pression de 1 N en ne se déformant que de 30 % environ par rapport à leur taille initiale. Puis, si la force appliquée augmente, la courbe présente une cassure franche, qui traduit la rupture de la capsule.

Il ressort ainsi que les capsules selon l'invention ont un comportement élastique : elles résistent fortement à la déformation jusqu'à la rupture de l'enveloppe. D'une façon générale, les capsules selon l'invention présentent une force à la rupture supérieure à 0,5 N. Selon la texture en bouche recherchée, celle-ci peut varier de 0,5 à 1,5 N.

## Revendications

1. Capsule comprenant une enveloppe comprenant au moins un polymère à usage alimentaire réactif aux ions multivalents, à l'intérieur de laquelle est confiné un produit laitier, **caractérisée en ce que** ladite enveloppe comprend, en outre, au moins un composé sélectionné dans le groupe constitué par les plastifiants, les sucres, les agents séquestrants des ions multivalents et les agents rétenteurs d'eau, et **en ce que** ladite capsule possède une force à la rupture supérieure à 0,5 N.

2. Capsule selon la revendication 1, **caractérisée en ce que** ledit polymère à usage alimentaire comprend des unités sélectionnées dans le groupe constitué par les unités guluroniques, galacturoniques et glucuroniques.

3. Capsule selon la revendication 1 ou la revendication 2, **caractérisée en ce que** ledit polymère à usage alimentaire est choisi dans le groupe constitué par les alginates, les gellanes, les pectines, et leurs mélanges.

4. Capsule selon l'une quelconque des revendications 1 à 3, **caractérisée en ce qu'**elle comprend au moins 40% en poids de produit laitier par rapport au poids total de la capsule.

5. Capsule selon l'une quelconque des revendications 1 à 4, **caractérisée en ce que** ledit produit laitier est choisi parmi les yaourts, les yaourts à boire, les laits fermentés, les fromages frais, les crèmes desserts et/ou les mousses lactées.

6. Procédé de fabrication de capsules selon l'une quelconque des revendications 1 à 5, **caractérisé en ce qu'**il comprend les étapes suivantes :
- préparation d'une solution aqueuse d'au moins un polymère à usage alimentaire réactif aux ions multivalents tel que défini dans l'une quelconque des revendications 1 à 3, ladite solution comprenant, en outre, au moins un composé sélectionné dans le groupe constitué par les plastifiants, les sucres, les agents séquestrants des ions multivalents et les agents rétenteurs d'eau ;
- mise en contact du produit laitier avec ladite solution ; et
- récupération des capsules formées.

7. Procédé selon la revendication 6, **caractérisé en ce que** ladite mise en contact s'effectue par coextrusion dudit produit laitier avec ladite solution.

8. Procédé selon la revendication 6, **caractérisé en ce que** ladite mise en contact du produit laitier avec ladite solution s'effectue par gouttage dudit produit laitier dans un bain de ladite solution.

9. Procédé selon la revendication 8, **caractérisé en ce que** ledit polymère à usage alimentaire présente en solution aqueuse à 1%, une viscosité à 25°C et à 60 rpm inférieure à 200 mPa.s.

10. Procédé selon la revendication 9, **caractérisé en ce que** ledit polymère à usage alimentaire est sélectionné dans le groupe constitué par :
- les alginates fortement gélifiants de poids moléculaire inférieur ou égal à 100 000,
- les gellanes faiblement acétylées, et
- les pectines de degré d'estérification inférieur où égal à 20.

11. Procédé selon l'une quelconque des revendications 6 à 10, **caractérisé en ce que** le plastifiant est sélectionné dans le groupe constitué par les alginates peu gélifiants de poids moléculaire inférieur ou égal à 100 000, les pectines de degré d'estérification compris entre 20 et 50, le sorbitol, le glycérol, les maltodextrines et les polyols.

12. Procédé selon l'une quelconque des revendications 6 à 11, **caractérisé en ce que** l'agent séquestrant des ions multivalents est un agent séquestrant des ions calcium sélectionné dans le groupe constitué par les citrates, les phosphates, les pyrophosphates et les métaphosphates.

13. Procédé selon l'une quelconque des revendications 6 à 12, **caractérisé en ce que** l'agent rétenteur d'eau est sélectionné dans le groupe constitué par la carouble et le guar.

14. Procédé selon l'une quelconque des revendications 6 à 13, **caractérisé en ce que** la solution de polymère comprend, exprimés en pourcentages pondéraux par rapport au volume total de ladite solution :
a) entre 0,5 et 5% de polymère à usage alimentaire réactif aux ions multivalents ;
b) entre 0 et 10% de plastifiant ;
c) entre 0 et 2% d'agent séquestrant ; et
d) entre 0 et 2% d'agent rétenteur d'eau.

15. Procédé selon l'une quelconque des revendications 6 à 14, **caractérisé en ce que** l'étape de récupération des capsules formées est suivie d'au moins un rinçage desdites capsules à l'aide d'eau permutée et/ou sucrée..

16. Procédé selon la revendications 15, **caractérisé en ce que** le rinçage est suivi d'une étape de séchage desdites capsules.

17. Capsule selon l'une quelconque des revendications 1 à 5, susceptible d'être obtenue par un procédé selon la revendication 7.

18. Capsule selon l'une quelconque des revendications 1 à 5, susceptible d'être obtenue par un procédé selon une quelconque des revendications 8 à 10.

19. Capsule selon l'une quelconque des revendications 17 ou 18, susceptible d'être obtenue par un procédé selon une quelconque des revendications 12 à 16.

## Claims

1. A capsule comprising an envelope comprising at least one polymer for food use which is reactive with multivalent ions, within which capsule there is confined a dairy product, **characterised in that** said envelope furthermore comprises at least one compound selected from the group consisting of plasticisers, sugars, sequestering agents for multivalent ions and water retention agents, and **in that** said capsule has a breaking load of greater than 0.5 N.

2. A capsule according to claim 1, **characterised in that** said polymer for food use comprises units selected from the group consisting of guluronic, galacturonic and glucuronic units.

3. A capsule according to claim 1 or claim 2, **characterised in that** said polymer for food use is selected from among the group consisting of alginates, gellans, pectins and mixtures thereof.

4. A capsule according to any one of claims 1 to 3, **characterised in that** it comprises at least 40% by weight of dairy product relative to the total weight of the capsule.

5. A capsule according to any one of claims 1 to 4, **characterised in that** said dairy product is selected from among yogurts, drinking yogurts, fermented milks, fromage frais, cream desserts and/or milky mousses.

6. A process for manufacturing capsules according to any one of claims 1 to 5, **characterised in that** it comprises the following steps:
- preparation of an aqueous solution of at least one polymer for food use which is reactive with multivalent ions as defined in any one of claims 1 to 3, said solution furthermore comprising at least one compound selected from the group consisting of plasticisers, sugars, sequestering agents for multivalent ions and water retention agents;
- bringing of the dairy product into contact with said solution; and
- recovery of the capsules formed.

7. A process according to claim 6, **characterised in that** said bringing into contact is performed by coextruding said dairy product with said solution.

8. A process according to claim 6, **characterised in that** said bringing of the dairy product into contact with said solution is performed by dripping said dairy product into a bath of said solution.

9. A process according to claim 8, **characterised in that** said polymer for food use exhibits a viscosity of less than 200 mPa·s in a 1% aqueous solution at 25°C and at 60 rpm.

10. A process according to claim 9, **characterised in that** said polymer for food use is selected from the group consisting of:
- alginates with a strong gelling action of a molecular weight of less than or equal to 100,000,
- slightly acetylated gellans, and
- pectins with a degree of esterification of less than or equal to 20.

11. A process according to any one of claims 6 to 10, **characterised in that** the plasticiser is selected from the group consisting of alginates with a weak gelling action of a molecular weight of less than or equal to 100,000, pectins with a degree of esterification of between 20 and 50, sorbitol, glycerol, maltodextrins and polyols.

12. A process according to any one of claims 6 to 11, **characterised in that** the sequestering agent for multivalent ions is a sequestering agent for calcium ions selected from the group consisting of citrates, phosphates, pyrophosphates and metaphosphates.

13. A process according to any one of claims 6 to 12, **characterised in that** the water retention agent is selected from the group consisting of carob and guar.

14. A process according to any one of claims 6 to 13, **characterised in that** the polymer solution comprises, stated in weight percentages relative to the total volume of said solution:
a) between 0.5 and 5% of polymer for food use which is reactive with multivalent ions;
b) between 0 and 10% of plasticiser;
c) between 0 and 2% of sequestering agent; and
d) between 0 and 2% of water retention agent.

15. A process according to any one of claims 6 to 14, **characterised in that** the step of recovering the capsules formed is followed by at least one rinsing of said capsules using deionised and/or sugared water.

16. A process according to claim 15, **characterised in that** rinsing is followed by a drying step of said capsules.

17. A capsule according to any one of claims 1 to 5, obtainable by a process according to claim 7.

18. A capsule according to any one of claims 1 to 5, obtainable by a process according to any one of claims 8 to 10.

19. A capsule according to any one of claims 17 or 18, obtainable by a process according to any one of claims 12 to 16.

## Patentansprüche

1. Kapsel mit einer Hülle, welche mindestens ein für Lebensmittelzwecke bestimmtes Polymer umfaßt, das mit mehrwertigen Ionen reaktionsfähig ist, in deren Innerem ein Milchprodukt eingeschlossen ist, **dadurch gekennzeichnet, daß** die Hülle des weiteren mindestens eine Verbindung umfaßt, die aus der Gruppe bestehend aus Plastiziermitteln, Zuckern, Mitteln zum Sequestrieren von mehrwertigen Ionen und Wasserrückhaltemitteln ausgewählt ist, sowie dadurch, daß die Kapsel eine Reißkraft von mehr als 0,5 N besitzt.

2. Kapsel nach Anspruch 1, **dadurch gekennzeichnet, daß** das für Lebensmittelzwecke bestimmte Polymer Einheiten aufweist, die aus der Gruppe bestehend aus Guluron-, Galacturon- und Glucuroneinheiten ausgewählt sind.

3. Kapsel nach Anspruch 1 oder Anspruch 2, **dadurch gekennzeichnet, daß** das für Lebensmittelzwecke bestimmte Polymer aus der Gruppe bestehend aus Alginaten, Gellanen, Pectinen und deren Mischungen ausgewählt ist.

4. Kapsel nach einem der Ansprüche 1 bis 3, **dadurch gekennzeichnet, daß** sie mindestens 40 Gew.-% Milchprodukt bezogen auf das Gesamtgewicht der Kapsel umfaßt.

5. Kapsel nach einem der Ansprüche 1 bis 4, **dadurch gekennzeichnet, daß** das Milchprodukt aus Joghurts, Trinkjoghurts, fermentierten Milchsorten, Frischkäsen, Dessert-Cremes und/oder Milchcremespeisen ausgewählt ist.

6. Verfahren zum Herstellen von Kapseln nach einem der Ansprüche 1 bis 5, **dadurch gekennzeichnet, daß** es die folgenden Schritte aufweist:
- Bereiten einer wäßrigen Lösung von mindestens einem für Lebensmittelzwecke bestimmten Polymer, das mit mehrwertigen Ionen reaktionsfähig ist, gemäß der Definition in einem der Ansprüche 1 bis 3, wobei die Lösung des weiteren mindestens eine Verbindung umfaßt, die aus der Gruppe bestehend aus Plastiziermitteln, Zuckern, Mitteln zum Sequestrieren von mehrwertigen Ionen, und Wasserrückhaltemitteln ausgewählt ist;
- - Zusammenbringen des Milchproduktes mit der Lösung; und
- Gewinnen der gebildeten Kapseln.

7. Verfahren nach Anspruch 6, **dadurch gekennzeichnet, daß** das Zusammenbringen durch Coextrudieren des Milchproduktes mit der Lösung stattfindet.

8. Verfahren nach Anspruch 6, **dadurch gekennzeichnet, daß** das Zusammenbringen durch Eintropfen des Milchproduktes in ein Bad der Lösung stattfindet.

9. Verfahren nach Anspruch 8, **dadurch gekennzeichnet, daß** das für Lebensmittelzwecke bestimmte Polymer in 1%-iger wäßriger Lösung eine Viskosität bei 25°C und bei 60 U/min von weniger als 200 mPa.s besitzt.

10. Verfahren nach Anspruch 9, **dadurch gekennzeichnet, daß** das für Lebensmittelzwecke bestimmte Polymer aus der Gruppe ausgewählt ist, die besteht aus:
- stark gelierfähigen Alginaten mit einer Molmasse von weniger als oder gleich 100.000,
- schwach acetylierten Gellanen, und
- - Pectinen mit einem Veresterungsgrad von weniger als oder gleich 20.

11. Verfahren nach einem der Ansprüche 6 bis 10, **dadurch gekennzeichnet, daß** das Plastiziermittel aus der Gruppe bestehend aus schwach gelierfähigen Alginaten mit einer Molmasse von weniger als oder gleich 100.000, Pectinen mit einem Veresterungsgrad von zwischen 20 und 50, Sorbitol, Glycerin, Maltodextrinen und Polyolen ausgewählt ist.

12. Verfahren nach einem der Ansprüche 6 bis 11, **dadurch gekennzeichnet, daß** das Mittel zum Sequestrieren von mehrwertigen Ionen ein Mittel zum Sequestrieren von Calciumionen ist, das aus der Gruppe bestehend aus Citraten, Phosphaten, Pyrophosphaten und Metaphosphaten ausgewählt ist.

13. Verfahren nach einem der Ansprüche 6 bis 12, **dadurch gekennzeichnet, daß** das Wasserrückhaltemittel aus der Gruppe bestehend aus Johannisbrot und Guaran ausgewählt ist.

14. Verfahren nach einem der Ansprüche 6 bis 13, **dadurch gekennzeichnet, daß** die Polymerlösung als Gewichtsprozentanteile bezogen auf das Gesamtvolumen der Lösung ausgedrückt umfaßt:
a) zwischen 0,5 und 5% für Lebensmittelzwecke bestimmtes Polymer, das mit mehrwertigen Ionen reaktionsfähig ist;
b) zwischen 0 und 10% Plastiziermittel;
c) zwischen 0 und 2% Sequestrierungsmittel; und
d) zwischen 0 und 2% Wasserrückhaltemittel.

15. Verfahren nach einem der Ansprüche 6 bis 14, **dadurch gekennzeichnet, daß** der Schritt des Gewinnens der gebildeten Kapseln von mindestens einem Spülen der Kapseln mit permutiertem Wasser und/oder Zuckerwasser gefolgt ist.

16. Verfahren nach Anspruch 15, **dadurch gekennzeichnet, daß** das Spülen von einem Schritt des Trocknens der Kapseln gefolgt ist.

17. Kapsel nach einem der Ansprüche 1 bis 5, welche durch ein Verfahren nach Anspruch 7 herstellbar ist.

18. Kapsel nach einem der Ansprüche 1 bis 5, welche durch ein Verfahren nach einem der Ansprüche 8 bis 10 herstellbar ist.

19. Kapsel nach einem der Ansprüche 17 oder 18, welche durch ein Verfahren nach einem der Ansprüche 12 bis 1.6 herstellbar ist.
